Europäisches Patentamt

European Patent Office

Office européen des brevets

(11) Veröffentlichungsnummer: **0 056 255**
**B1**

(19)

(12) # EUROPÄISCHE PATENTSCHRIFT

(45) Veröffentlichungstag der Patentschrift:
29.08.84

(21) Anmeldenummer: 82100087.4

(22) Anmeldetag: 08.01.82

(51) Int. Cl.³: **E 04 F 13/08**

(54) Vorrichtung zum Befestigen von Gegenständen an einer fertigen Betonwand.

(30) Priorität: **13.01.81 DE 3100733**

(43) Veröffentlichungstag der Anmeldung:
**21.07.82 Patentblatt 82/29**

(45) Bekanntmachung des Hinweises auf die Patenterteilung:
**29.08.84 Patentblatt 84/35**

(84) Benannte Vertragsstaaten:
**AT BE CH DE FR GB IT LI NL SE**

(56) Entgegenhaltungen:
**BE - A - 646 376
DE - A - 2 444 078
FR - A - 2 022 354
FR - A - 2 259 274
FR - A - 2 283 349
FR - A - 2 337 812
FR - A - 2 376 323
GB - A - 2 018 340**

(73) Patentinhaber: **VOLKSBANK
Markgröningen-Schwieberdingen und Umgebung eG,
Graf-Hartmann-Strasse 2, D-7145 Markgröningen (DE)**

(72) Erfinder: **Szathmary, Janos, Seitenstrasse 5,
D-7141 Oberriexingen (DE)**

(74) Vertreter: **Patentanwälte Dr. Ing. Eugen Maier Dr. Ing.
Eckhard Wolf, Pischekstrasse 19, D-7000 Stuttgart 1 (DE)**

**Beschreibung**

Die Erfindung betrifft eine Vorrichtung zur Befestigung von Gegenständen an einer fertigen Betonwand mittels Wandankern der im Oberbegriff der Ansprüche 1 und 2 angegebenen Gattung.

Es ist bekannt, Gegenstände an einer Fertigwand zu befestigen, indem in die Wand eine Bohrung eingebracht und in dieser Bohrung ein Anker befestigt wird. An dem Anker kann außenseitig eine Montageplatte vorgesehen sein, an der beliebige Montagehilfsmittel oder Befestigungsorgane wie Konsolen, Laschen, Rohrschellen, Rohrbrieden angebracht sein können. Die Wandanker enthalten üblicherweise Axialbohrungen, durch die eine Füllmasse, beispielsweise aus Kunstharz oder Zement, zum Ausfüllen der vorhandenen Zwischenräume eingespritzt wird, die sich beim Aushärten mit der Ankeroberfläche und der Begrenzungsfläche der Bohrung gegebenenfalls klebend verbindet. Wenn der Wandanker in seinem rückwärtigen Teil einen verbreiterten Ankerfuß aufweist, kann sich dieser beim Auftreten von Zugkräften von hinten her an der Füllmasse abstützen. Diese Verankerungsart hat allerdings den Nachteil, daß schon bei Überschreiten verhältnismäßig geringer Zugkräfte sich der Anker mit der Füllmasse aus der Bohrung lösen und herausziehen läßt.

Weiter ist es bei einer Befestigungsvorrichtung der eingangs angegebenen Art bekannt (FR-A-2 259 279), einen Anker zu verwenden, der an seinem Ankerfuß durch Schlitze voneinander getrennte, aufspreizbare Teile enthält, die mit Hilfe eines Schlagbolzens aufgespreizt und gegen die Bohrungsinnenfläche gedrückt werden. Sofern das Wandmaterial relativ weich ist, werden die Spreizteile hierbei eingekerbt und am Wandmaterial gegen ein Herausziehen verankert. In Beton als Wandmaterial ist wegen dessen hoher Festigkeit ein Einkerben der Spreizteile praktisch nicht möglich; man erhält deshalb nur einen Reibungsschluß zwischen den Spreizteilen und der Bohrungswand, der auch schon mit vehältnismäßig kleinen Zugkräften überwunden werden kann.

Um diesen Nachteil zu vermeiden, ist es vor allem bei Verankerungen in Stein-, Fels- und Mauerwänden aus verhältnismäßig weichem Material an sich bekannt, die Wandbohrung mit Hinterschneidungen zu versehen, in die die aufspreizbaren Teile eines Wandankers unter Herstellung einer formschlüssigen Verbindung eindrückbar sind. Bei als Sacklochbohrungen ausgebildeten Wandbohrungen ist es prinzipiell möglich, den Sacklochboden als Widerlager für den Anker während des Aufspreizvorgangs zu verwenden. Da andererseits beim Einbringen der Hinterschneidung mit Hilfe einer speziellen Fräs-, Bohr- oder Schneidmaschine kaum verhindert werden kann, daß am Ende der Sacklochbohrung noch ein mehr oder weniger kurzer Bohrungsabschnitt mit dem ursprünglichen Durchmesser stehen bleibt, ist es bei einem Anker mit im wesentlichen zylindrischer Gestalt auch im Bereich des Ankerfußes der in der FR-A 2 259 274 beschriebenen Art prinzipiell nicht möglich, beim Abstützen des Ankerfußes gegen den Sacklochboden eine Aufspreizung in die Hinterschneidung zu bewirken, vor allem wenn der Anker aus einem harten, schwer verformbaren Werkstoff, wie Stahl, besteht. Weiter wird in diesem Zusammenhang bei dem bekannten Anker als nachteilig empfunden, daß der Schlagbolzen einen im Verhältnis zum erweiterten Teil der Axialbohrung dünnen Schaft aufweist, der einmal nur eine relativ geringe Aufweitung der Spreizteile ermöglicht und zum anderen eine unnötige Schwächung des Schafts bedeutet, die ein Aufspreizen relativ steifer Ankermaterialien aus Stahl unmöglich machen kann. Hinzu kommt, daß der Bolzen mit seinem am Schaftende angeordneten Kopf in der Axialbohrung des Ankers nicht ausreichend geführt ist und sich dort vor allem bei langen Axialbohrungen mit seinem Kopf verhaken kann.

Weiter ist es bei einem als zylindrische massive Stange ausgebildeten Wandanker mit einem aufspreizbaren Ankerfuß an sich bekannt (FR-A 2 337 812), den Ankerfuß beim Einschlagen des Ankers durch einen sich am Boden einer sacklochartigen Wandbohrung abstützenden Keil aufzuspreizen und dabei eine auf den Ankerfuß aufgeschobene, mit einem Längsschlitz versehene Manschette in das benachbarte Wandmaterial unter Bildung eines Formschlusses einzukerben. Bei Betonwänden ist eine solche Vorrichtung wegen der hohen Festigkeit von Beton nicht verwendbar. Die Hinterschneidung muß hier vielmehr vorgeformt werden, wobei die oben erwähnten Besonderheiten bei der Einbringung von Hinterschneidungen in Sacklochbohrungen bei der Ausbildung des Ankers konstruktiv zu berücksichtigen sind.

Der Erfindung liegt die Aufgabe zugrunde, eine Befestigungsvorrichtung der eingangs angegebenen Art zu schaffen, die mit geringem Materialaufwand eine zuverlässige und trotzdem einfach herzustellende, erdbebensichere Befestigung auch schwerster Gegenstände in hinterschnittenen Sacklochbohrungen an Betonwänden gewährleistet.

Zur Lösung dieser Aufgabe werden die in den Patentansprüchen 1 und 2 angegebenen Merkmalskombinationen vorgeschlagen. Weitere vorteilhafte Ausgestaltungen und Weiterbildungen der Erfindung ergeben sich aus den Patentansprüchen 3 bis 14.

Der erfindungsgemäße Schlagbolzen weist an seinem zylindrischen Schaft einen dem weiten Teil der Axialbohrung angepaßten Durchmesser auf, so daß er in der Axialbohrung gut geführt und beim Aufspreizvorgang hohen Belastungen aussetzbar ist.

Im Falle der einen Erfindungsvariante ist der Schlagbolzen insgesamt länger und seine Konusspitze kürzer als der Abstand zwischen der Querschnittsverengung und dem stirnseitigen Ende des Ankerfußes. Damit wird erreicht, daß der Schlagbolzen beim Aufspreizen des Ankerfußes zwar bis zum Schaft in die Querschnittsverengung eingetrieben werden kann, aber rechtzeitig an dem als Widerlager dienenden Boden der Sacklochbohrung anschlägt, um nicht nach hinten herauszufallen. Die Übergangsstelle zwischen dem weiten Teil und dem engen Teil der Axialbohrung ist durch teilkreisförmige scharfkantige Randstücke gebildet, die im aufgespreizten Zustand des Ankerfußes mit ihren spitzen Ecken widerhakenartig gegen die zylindrische, gegebenenfalls mit Umfangsrillen versehene Mantelfläche des Bolzenschaftes anliegen, so daß sich der Schlagbolzen auch bei Wechselbeanspruchungen nicht mehr selbsttätig nach rückwärts verschieben kann. Da beim Einbringen der Hinterschneidung am Ende der Sacklochbohrung noch ein Bohrungsabschnitt mit dem ursprünglichen Durchmesser stehen bleibt, der erfindungsgemäße Anker sich beim Aufspreizen des Ankerfußes aber am Boden gerade dieses Bohrungsabschnitts abstützt, werden erfindungsgemäß besondere Vorkehrungen getroffen, die trotz dieser Verengung ein zuverlässiges Aufspreizen des Ankerfußes in die Hinterschneidung hinein gewährleisten.

Bei der ersten Variante der erfindungsgemäßen Befestigungsvorrichtung erfolgt dies dadurch, daß der Ankerfuß einen stirnseitigen Ansatz mit im Vergleich zum übrigen Ankerdurchmesser kleineren Querabmessungen aufweist, dessen Mantelfläche im gespreizten Zustand des Ankerfußes bei bis zum Schaft in die Querschnittsverengung eingetriebenen Schlagbolzen zumindest in der Nähe seines freien Endes sich innerhalb des Durchmesserbereichs der nicht aufgespreizten Ankerteile befindet.

Bei der zweiten Variante der erfindungsgemäßen Befestigungsvorrichtung ist zusätzlich ein Keil mit ebenen Keilflächen vorgesehen, der mit seiner scharfen Keilkante stirnseitig in den Längsschlitz des Ankerfußes einsetzbar ist, im ungespreizten Zustand über die Stirnflächen des Ankerfußes übersteht und durch Einschlagen des Wandankers in die als Sackloch ausgebildete Wandbohrung und Anstützen des Keils mit seiner der Keilkante gegenüberliegenden Begrenzungsfläche gegen den Boden des Sacklochs unter Aufspreizen der genannten Teile des Ankerfußes in den Längsschlitz eintreibbar ist. Der Schlagbolzen hat dort vor allem die Funktion, den Keil auch bei hohen Wechselbeanspruchungen im Längsschlitz am Ankerfuß zu sichern, indem er mit seiner Konusspitze voraus in den Bereich zwischen der einen Keilfläche und einem der gespreizten Teile des Ankerfußes eingetrieben wird.

Die Querschnittsverringerung innerhalb der Axialbohrung weist zweckmäßig ein Verhältnis von mindestens 1 : 2, vorzugsweise von mindestens 1 : 3 auf. Um ein definiertes und möglichst scharfkantiges Aufspreizen des Ankerfußes zu gewährleisten, ist der Längsschlitz zur Wurzel

der Spreizteile des Ankerfußes hin unter Bildung einer materialverdünnenden Biegezone durch eine Querbohrung begrenzt, deren Durchmesser größer als die Schlitzweite ist.

Gemäß einer weiteren vorteilhaften Ausgestaltung der Erfindung ist der Wandanker an seinem außenseitigen Ende mit einer dickwandigen Flanschplatte über deren Bodenfläche im wesentlichen senkrecht überstehend starr verbunden, die an ihrer gegenüberliegenden Breitseitenfläche ein überstehendes Aufhängeorgan mit größerem Querschnitt als der Wandanker zur Befestigung von Gegenständen trägt. Die Flanschplatte ist in eine ihren Abmessungen entsprechende, die Mündung der Wandbohrung für den Anker enthaltende Vertiefung der Wandoberfläche einsetzbar und mit ihrer Mantel- und Bodenfläche an den Vertiefungswänden abstützbar. Da die Vertiefung relativ flach ausgebildet sein kann und ihr Boden daher nicht bis zu einer Stahlarmierung reicht, kann sie ohne Beschädigungsgefahr für die Armierungsstäbe in die Wand eingebracht werden. Mit diesen Vorkehrungen ist es möglich, auch schwerste Lasten mit Hilfe eines relativ dünnen Wandankers an der Betonwand zu befestigen.

Im folgenden wird die Erfindung anhand der Zeichnung näher erläutert. Es zeigt

Fig. 1 einen Wandanker mit Schlagbolzen in nichtgespreiztem Zustand in einer ausschnittsweisen längsgeschnittenen Darstellung;

Fig. 2 einen gegenüber Fig. 1 um 90° gedrehten Schnitt durch den Anker in gespreiztem Zustand;

Fig. 3 eine Draufsicht auf eine Befestigungsvorrichtung bestehend aus einer in einer Wandvertiefung versenkbaren Flanschplatte, einem Wandanker und einem Aufhängezapfen;

Fig. 4 einen Schnitt entlang der Schnittlinie 4-4 der Fig. 3;

Fig. 5 einen ausschnittsweisen Längsschnitt durch einen Wandanker mit einem stirnseitig in den Ankerfuß einsetzbaren ebenen Keil und einem Schlagbolzen im ungespreizten Zustand;

Fig. 6 den Wandanker nach Fig. 5 im vorgespreizten Zustand;

Fig. 7 den Wandanker nach Fig. 5 und 6 im gespreizten und gesicherten Zustand.

Die in der Zeichnung dargestellten Vorrichtungen zur Befestigung von Gegenständen in einer Betonwand enthalten einen in eine Bohrung 10 einer Betonwand 1 einsetzbaren Wandanker 5, der einen in eine radiale Vertiefung 11 in der Begrenzungsfläche der Bohrung 10 aufspreizbaren Ankerfuß 51 aufweist.

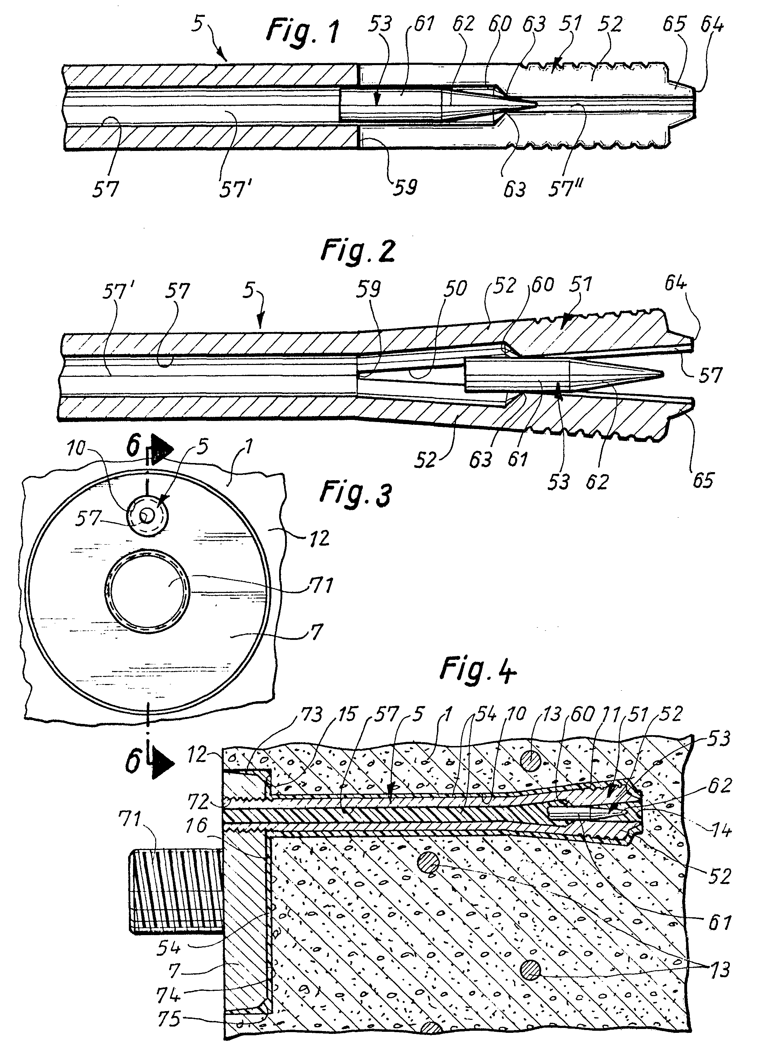

Der in den Fig. 1 und 2 gezeigte Wandanker 5 besteht im wesentlichen aus einem relativ dickwandigen zylindrischen Stahlrohr, das an seinem stirnseitigen, den Ankerfuß 51 bildenden Teil zwei durch einen Schlitz 50 voneinander getrennnte und an ihrer Wurzel 59 miteinander verbundene Spreizteile 52 aufweist. Die durchgehende Axialbohrung weist etwa auf halber Länge des Schlitzes 50 eine zum freien Ende des Ankerfußes 51 weisende stufenförmige Querschnittsverengung 60 auf. In der Axialbohrung 57 befindet sich ein Schlagbolzen 53, der einen zylindrischen Schaft 61 und eine konische Spitze 62 aufweist. Der Schlagbolzen 53 ist mit seinem Schaft 61 im weiten Teil 57' der Bohrung 57 geführt und greift mit seiner Spitze 62 im nichtgespreizten Zustand durch die Querschnittsverengung 60 hindurch in den engen Teil 57'' der Axialbohrung ein. Für Transportzwecke wird der Schlagbolzen 53 ohne merkliche Aufspreizung des Ankerfußes 51 in die Querschnittsverengung 60 eingedrückt und dort durch die Federwirkung der Spreizteile 52 festgehalten (Fig. 1).

Zum Aufspreizen der Spreizteile 52 wird der Schlagbolzen 53 mit Hilfe einer von außen durch den weiten Teil 57' der Axialbohrung 57 in den Wandanker eingeführten Stange und einem Schlagwerkzeug in den engen Teil 57'' der Axialbohrung 57 so weit eingetrieben, bis die teilkreisförmigen, die Verengung 60 bildenden scharfkantigen Ränder mit ihren spitzen Ecken 63 gegen die Mantelfläche des Schafts 61 anliegen. Die spitzen Ecken 63 krallen sich widerhakenartig an der Mantelfläche des Schafts 61 fest und verhindern, daß der Schlagbolzen 53 beim Auftreten von Zug-, Druck- und Wechselbeanspruchungen sich selbsttätig aus dieser Verbindung lösen kann. Eine weitere Verbesserung in dieser Hinsicht läßt sich noch durch nicht gezeigte Umfangsrillen im Schaft 61 erzielen, in die die Spreizteile 52 mit ihren Ecken 63 einrasten können.

Die Gesamtlänge des Schlagbolzens 53 ist größer als der Abstand zwischen der Querschnittsverengung 60 und dem stirnseitigen Ende 64 des Ankerfußes 51. Da beim Einschlagen des Schlagbolzens 53 in der Regel der Boden 14 der als Sackloch ausgebildeten Bohrung 10 dem Wandanker 5 als Widerlager dient, kann somit der Schlagbolzen 53 nicht versehentlich mit seinem rückwärtigen Ende über die scharfkantige Querschnittsverengung 60 hinaus eingeschlagen werden, da er zuvor mit seiner Spitze 62 gegen den Sacklochboden 14 anschlägt.

Die eine Hinterschneidung bildende radiale Vertiefung 11 innerhalb der Bohrung 10 wird üblicherweise mit Hilfe einer Spezialfräsmaschine eingebracht. Dabei kann meist schon aus konstruktiven Gründen das Fräswerkzeug nicht unmittelbar vom Boden 14 der Sacklochbohrung aus radial nach außen getrieben werden. Es verbleibt vielmehr noch ein kurzer Abschnitt der Bohrung 10 mit dem ursprünglichen Durchmesser stehen, wie beispielsweise in Fig. 4 zu erkennen ist. Da sich der Wandanker 5 beim Einschlagen des Schlagbolzens 53 am Boden 14 der Sacklochbohrung abstützt, enthält der in Fig. 1 bis 4 gezeigte Wandanker 5 einen stirnseitig am Ankerfuß 51 überstehenden Ansatz 65, der im ungespreizten Zustand einen wesentlich kleineren Durchmesser als die übrigen Teile des Ankers aufweist (Fig. 1) und der auch im axial gespreizten Zustand der Spreizteile 52 zumindest in einem gewissen Bereich nahe der Stirnfläche 64 nicht über den normalen Durchmesser des Wandankers 65 aufgespreizt werden kann (Fig. 2). Damit wird gewährleistet, daß der Wandanker 5 trotz des am Bohrungsboden 14 noch vorhandenen engen Bohrungsabschnitts mit seinen Spreizteilen 52 ungehindert in die Vertiefung 11 aufgespreizt werden kann.

In den Fig. 3 und 4 ist eine Befestigungsvorrichtung gezeigt, bei der ein Wandanker 5 nach den Fig. 1 und 2 an seinem dem Ankerfuß gegenüberliegenden, außenseitigen Ende mit einer dickwandigen Flanschplatte 7 verbunden ist, die auf ihrer dem Wandanker 5 gegenüberliegenden Seite ein als Gewindezapfen ausgebildetes Aufhängeorgan 71 trägt und die in eine Vertiefung 15 in der Wandoberfläche 12 mit entsprechenden Abmessungen versenkt einsetzbar ist.

Der Wandanker 5 ist dabei in eine exzentrisch an der Flanschplatte 7 angeordnete Gewindebohrung 72 eingeschraubt und dort erforderlichenfalls verschweißt, während der Gewindezapfen 71 mittig zur Wandaußenseite hin über die Flanschplatte 7 übersteht. Die Flanschplatte 7 stützt sich mit ihrer Umfangsfläche 73 und mit ihrer ankerseitigen Breitseitenfläche 74 an den Begrenzungsflächen der Vertiefung 15 ab. Etwaige Zwischenräume 16 zwischen der Flanschplatte 7 und den Begrenzungsflächen der Vertiefung 15 werden mit einer aushärtenden Füllmasse 54 ausgefüllt, die zweckmäßig über die Axialbohrung 57 im Wandanker 5 unter einem hohen Druck eingespritzt wird und von hinten durch den zwischen der Ankeroberfläche und der Bohrungswand gebildeten Spalt hindurch in die genannten Zwischenräume 16 eindringt. Um das Eindringen der Füllmasse 54 in die Zwischenräume 16 im Umfangsbereich 73 der Flanschplatte zu erleichtern, ist die rückwärtige Kante 75 der Flanschplatte angefast.

Die in den Fig. 3 und 4 gezeigte Befestigungsvorrichtung vermag ein Mehrfaches an Scherkräften aufzunehmen als der Wandanker 5 allein, da diese über das dicke Aufhängeorgan 71 und die Flanschplatte 7 innerhalb der Vertiefung 15 großflächig auf die Betonwand 1 übertragen werden, so daß der Wandanker 5 weitgehend entlastet ist. Dies hat insbesondere den Vorteil, daß auch zur Aufhängung großer Lasten ein relativ dünner Wandanker 5 verwendet werden kann. Die für einen solchen Wandanker ausreichende enge Bohrung 10 läßt sich vor allem bei stark bewehrten Betonwänden viel leichter durch die engmaschigen und meist versetzt angeordneten Stahlarmierungen ohne Beschädigung der Armierungsstäbe 13 einbringen, als dies bei den sonst erforderlichen Bohrungen mit größerem Durchmesser der Fall wäre.

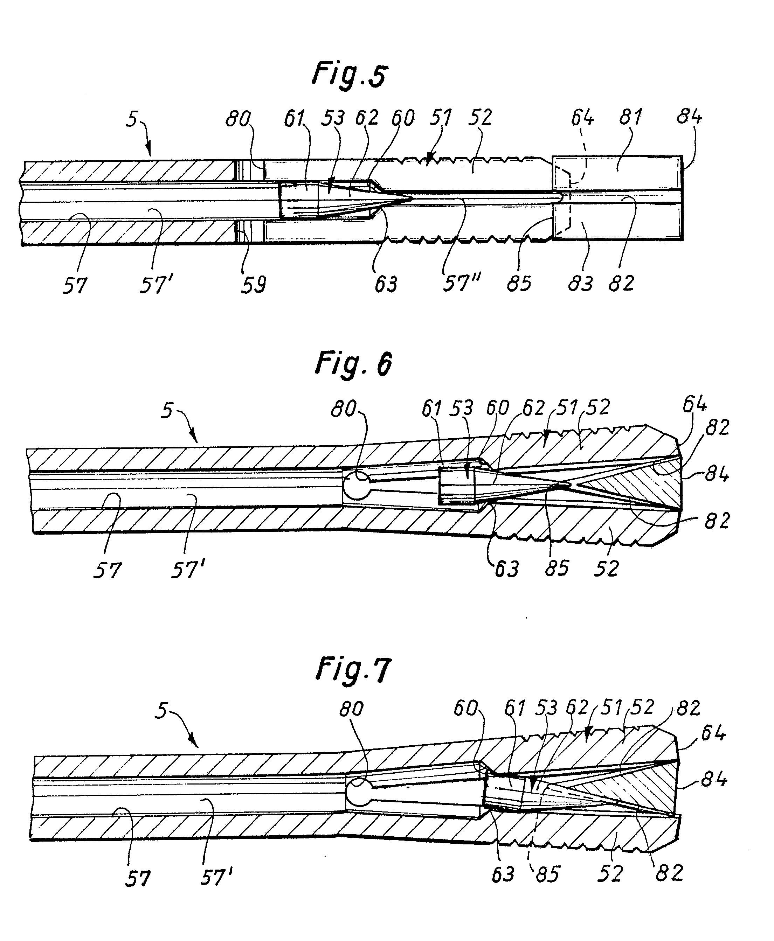

In den Fig. 5 bis 7 ist ein weiteres bevorzugtes Ausführungsbeispiel eines Wandankers mit einem stirnseitig in den Ankerfuß einsetzbaren ebenen Keil und einem Schlagbolzen in ausschnittsweisen Längsschnitten dargestellt. Im ungespreizten Zustand steht der mit seiner scharfen Keilkante 85 stirnseitig in den Längsschlitz 50 eingesetzte und dort federnd festgeklemmte Keil 81 mit seinem rückwärtigen Teil axial über den Ankerfuß 51 über (Fig. 5). Dieser Wandanker 5 kann in eine mit einer konischen radialen Vertiefung 11 versehene Sacklochbohrung 12 eingeführt und in diese unter Abstützen der rückwärtigen Stirnfläche 84 des Keils 81 gegen den Sacklochboden 14 eingeschlagen werden. Hierbei wird der Keil 81 unter Aufspreizen der Spreizteile 52 des Ankerfußes in den Längsschlitz 50 vollständig eingetrieben (Fig. 6). Anschließend wird der Schlagbolzen 53 durch die Querschnittsverengung 63 in der Axialbohrung 57 hindurch in den Bereich zwischen der einen Keilfläche 83 und dem einen Spreizteil 52 eingeschlagen, bis sich der Bolzenschaft 61 im Bereich der Querschnittsverengung 63 befindet. Der Bolzen 61 wird dabei im rillenförmigen Teil der Bohrung 57" des betreffenden Spreizteils 52 einerseits und in der Rille 82 in der benachbarten Keilfläche 83 andererseits im wesentlichen axial geführt. Beim Einschlagen des Bolzens 53 tritt eine weitere Aufspreizung der Spreizteile 52 sowie zusätzlich eine gegenseitige Verkeilung zwischen dem Bolzen 53, dem Keil 81 und den Spreizteilen 52 auf (Fig. 7).

Um ein definiertes Aufspreizen der Spreizteile 52 zu gewährleisten, ist der Längsschlitz 50 zur Wurzel 59 der Spreizteile 52 hin durch eine Querbohrung 80 begrenzt, deren Durchmesser größer als die Schlitzweite ist und damit eine materialverdünnte Biegezone an den Spreizteilen 52 erzeugt.

**Patentansprüche**

1. Vorrichtung zur Befestigung von Gegenständen an einer fertigen Betonwand mit einem in eine Bohrung (10) der Betonwand (1) einsetzbaren, eine durchgehende Axialbohrung aufweisenden Wandanker (5), der mindestens einen die Axialbohrung (57) durchdringenden, den Ankerfuß (51) in mindestens zwei an ihrer Wurzel (59) zusammenhängende Spreizteile (52) trennenden, zum freien Ende (64) des Ankerfußes hin offenen Längsschlitz (50) enthält und dessen Axialbohrung (57) etwa auf halber Länge des Längsschlitzes (50) zur Seite des Ankerfußes (64) eine stufenförmige Querschnittsverringerung (60) aufweist, und mit einem entlang der Axialbohrung (57) verschiebbaren, mit einer konischen Oberfläche die beiden Spreizteile (52) des Ankerfußes (51) aufspreizenden Schlagbolzen (53), der eine vom weiten Teil (57') in den engen Teil (57") der Axialbohrung (57) eingreifende Konusspitze (62) und einen an die Konusspitze rückwärtig anschließenden zylindrischen Schaft (61) aufweist und der insgesamt länger und dessen Konusspitze kürzer als der Abstand zwischen der Querschnittsverengung (60) und dem stirnseitigen Ende (64) des Ankerfußes (51) ist, dadurch gekennzeichnet, daß der zylindrische Schaft (61) des Schlagbolzens einen dem zweiten Teil (57') der Axialbohrung angepaßten Durchmesser aufweist und daß der Ankerfuß (51) einen stirnseitigen Ansatz (65) mit im Vergleich zum übrigen Ankerdurchmesser kleineren Querabmessungen aufweist, dessen Mantelfläche im gespreizten Zustand des Ankerfußes (51) bei bis zum Schaft (61) in die Querschnittsverengung (60) eingetriebenem Schlagbolzen zumindest in der Nähe seines freien Endes (64) sich innerhalb des Durchmesserbereichs der nichtaufgespreizten Ankerteile befindet.

2. Vorrichtung zur Befestigung von Gegenständen an einer fertigen Betonwand mit einem in eine Bohrung (10) der Betonwand (1) einsetzbaren, eine durchgehende Axialbohrung aufweisenden Wandanker (5), der mindestens einen die Axialbohrung (57) durchdringenden, den Ankerfuß (51) in mindestens zwei an ihrer Wurzel (59) zusammenhängende Spreizteile (52) trennenden, zum freien Ende (64) des Ankerfußes (51) hin offenen Längsschlitz (50) enthält und dessen Axialbohrung (57) etwa auf halber Länge des Längsschlitzes (57) zur Seite des Ankerfußes (64) hin eine stufenförmige Querschnittsverringerung (60) aufweist, und mit einem entlang der Axialbohrung verschiebbaren, mit einer konischen Oberfläche der beiden Spreizteile (52) des Ankerfußes (51) aufspreizenden Schlagbolzen (53), der eine vom weiten Teil (57') in den engen Teil (57") der Axialbohrung (57) eingreifende Konusspitze (62) und einen an die Konusspitze rückwärtig anschließenden zylindrischen Schaft (61) aufweist, dadurch gekennzeichnet, daß der zylindrische Schaft (61) des Schlagbolzens (53) einen dem zweiten Teil (57') der Axialbohrung angepaßten Durchmesser aufweist, daß zusätzlich ein Keil (81) mit ebenen Keilflächen (83) vorgesehen ist, der mit seiner scharfen Keilkante (85) stirnseitig in den Längsschlitz (50) des Ankerfußes (51) einsetzbar ist, im ungespreizten Zustand über die Stirnflächen (64) des Ankerfußes übersteht und durch Einschlagen des Wandankers (5) in die als Sackloch ausgebildete Wandbohrung (10) und Abstützen des Keils (81) mit seiner der Keilkante (85) gegenüberliegenden Begrenzungsfläche (84) gegen den Boden (14) des Sacklochs unter Aufspreizen der Spreizteile (52) des Ankerfußes (51) in den Längsschlitz (50) eintreibbar ist, und daß der Schlagbolzen (53) mit seiner Konusspitze (62) voraus in den Bereich zwischen der einen Keilfläche (83) des Keils (81) und einem der Spreizteile (52) des Ankerfußes (51) eintreibbar ist.

3. Vorrichtung nach Anspruch 1, dadurch gekennzeichnet, daß der stirnseitige Ansatz (65) vom übrigen Teil des Ankerfußes (51) stufenförmig abgesetzt ist.

4. Vorrichtung nach Anspruch 2, dadurch gekennzeichnet, daß der Keil (81) eine dem Durchmesser des Wandankers (5) entsprechende Breite aufweist, und daß in den beiden Keilflächen (83) mittig verlaufende Längsrillen (82) zur Führung des Schlagbolzens (53) vorgesehen sind.

5. Vorrichtung nach einem der Ansprüche 1 bis 4, dadurch gekennzeichnet, daß die Querschnittsverringerung (60) der Axialbohrung (57) ein Verhältnis von mindestens 1 : 2, vorzugsweise von mindestens 1 : 3 aufweist.

6. Vorrichtung nach einem der Ansprüche 1 bis 5, dadurch gekennzeichnet, daß die Übergangsstelle zwischen dem weiten Teil (57') und dem engen Teil (57'') der Axialbohrung (57) durch teilkreisförmige scharfkantige Randstücke gebildet ist, die im aufgespreizten Zustand des Ankerfußes (51) mit ihren spitzen Ecken (63) widerhakenartig gegen die zylindrische, gegebenenfalls mit Umfangsrillen versehene Mantelfläche des Bolzenschaftes (61) anliegen.

7. Vorrichtung nach einem der Ansprüche 1 bis 6, dadurch gekennzeichnet, daß der Längsschlitz (50) zur Wurzel (59) der Spreizteile (52) des Ankerfußes (51) hin unter Bildung einer materialverdünnenden Biegezone an den Spreizteilen (52) durch eine Querbohrung (80) begrenzt ist, deren Durchmesser größer als die Schlitzweite ist.

8. Vorrichtung nach einem der Ansprüche 1 bis 7, dadurch gekennzeichnet, daß der Wandanker (5) an seinem außenseitigen Ende mit einer dickwandigen Flanschplatte (7) über deren Bodenfläche (74) im wesentlichen senkrecht überstehend starr verbunden ist, die an ihrer der Oberfläche gegenüberliegenden Breitseitenfläche ein überstehendes Aufhängeorgan (51) mit größerem Querschnitt als der Wandanker (5) zur Befestigung von Gegenständen trägt und die in eine den Abmessungen der Flanschplatte (7) entsprechende, die Mündung der Ankerbohrung (10) enthaltende Vertiefung (15) der Wandoberfläche (12) einsetzbar und mit ihrer Umfangs- oder Bodenfläche (73, 74) an den Vertiefungswänden abstützbar ist.

9. Vorrichtung nach Anspruch 8, dadurch gekennzeichnet, daß der Wandanker (5) außermittig und das bolzen- oder zapfenförmige Aufhängeorgan (71) mittig im Abstand voneinander an der Flanschplatte (7) angeordnet sind.

10. Vorrichtung nach Anspruch 8 oder 9, dadurch gekennzeichnet, daß die Flanschplatte (7) einen kreisförmigen Umriß aufweist.

11. Vorrichtung nach einem der Ansprüche 8 bis 10, dadurch gekennzeichnet, daß die Kante (75) der ankerseitigen Breitseitenfläche (74) der Flanschplatte (7) angefast ist.

12. Vorrichtung nach einem der Ansprüche 8 bis 11, dadurch gekennzeichnet, daß der Wandanker (5) in eine Gewindebohrung (72) der Flanschplatte (7) eingeschraubt und/oder mit dieser verschweißt ist.

13. Vorrichtung nach einem der Ansprüche 8 bis 12, dadurch gekennzeichnet, daß das Aufhängeorgan (71) als an der Flanschplatte (7) angeschweißter Gewindezapfen ausgebildet ist.

14. Vorrichtung nach einem der Ansprüche 1 bis 13, dadurch gekennzeichnet, daß die Axialbohrung (57) sowie die Hohl- und Zwischenräume im aufgespreizten Ankerfuß (51) und zwischen der Ankeroberfläche und der Wandbohrung (10) mit einer aushärtenden Füllmasse (54) ausfüllbar sind.

**Claims**

1. A device for securing objects on a finished concrete wall and comprising a wall anchor (5) which can be inserted in a hole (10) in the concrete wall (1) and has a continuous axial bore and which contains at least one longitudinal slot (50), which penetrates the axial bore (57), divides the foot (51) of the anchor into at least two spreadable portions (52) interconnected at their roots (59), and is open towards the free end (64) of the foot of the anchor, the axial bore (57) of the wall anchor having a stepwise reduced cross-section (60) approximately halfway along the longitudinal slot (50) and near the foot (64) of the anchor, which device also comprises a knock-in pin (53) which is displaceable along the axial bore (57) and has a tapered surface for opening up the two spreadable portions (52) of the foot (51) of the anchor and which comprises a tapered tip (62), extending from the wide portion (57') into the narrow portion (57'') of the axial bore (57), and a cylindrical stem (61) rearwardly adjoining the tapered tip, the knock-in pin being in total longer, and its tapered tip shorter, than the distance between the portion (60) of reduced cross-section and the end-face (64) of the foot (51) of the anchor, characterized in that the cylindrical stem (61) of the knock-in pin has a diameter adapted to fit the axial bore, and in that the foot (51) of the anchor has a terminal extension (65) which has transverse dimensions smaller than the diameter of the rest of the anchor, and the peripheral face of which, when the foot (51) of the anchor is in the spread position and the knock-in pin is driven into the portion (60) of reduced cross-section as far as the stem (61), is located at least in the proximity of t he extreme end (64) within the range of the diameter of the unspread portions of the anchor.

2. A device for securing objects on a finished concrete wall and comprising a wall anchor (5) which can be inserted in a hole (10) in the concrete wall (1) and has a continuous axial bore and which contains at least one longitudinal slot (50), which penetrates the axial bore (57), divides the foot (51) of the anchor into at least two spreadable portions (52) interconnected at their roots (59), and is open towards the free end (64) of the foot (51) of the anchor, the axial bore (57) of the wall anchor having a stepwise reduced cross-section (60) approximately halfway along the longitudinal slot (50) and near the foot (64) of the anchor, which device also comprises a knock-in pin (53) which is displaceable along the axial bore (57) and has a tapered surface for opening up the two spreadable portions (52) of the foot (51) of the anchor and which comprises a tapered tip (62), extending from the wide portion (57') into the narrow portion (57'') of the axial bore (57), and a cylindrical stem (61) rearwardly adjoining the tapered tip, characterized in that the cylindrical stem (61) of the knock-in pin (53) has a diameter adapted to fit the wide portion (57') of the axial bore, in that in addition a wedge (81) with planar wedge faces (83) is provided, which wedge can be inserted at its sharp edge (85) into the end of the longitudinal slot (50) in the foot (51) of the anchor, extends beyond the end faces (64) of the foot of the anchor in the unspread condition, and, by knocking the wall anchor (5) into the hole (10) in the wall, formed as a blind hole, and by supporting the wedge (81), by its delimiting surface (84) remote from the edge (85) against the bottom (14) of the blind hole while opening up the spreadable portions (52) of the foot (51) of the anchor, the wedge can be driven into the longitudinal slot (50), and in that the knock-in pin (53), with its tapered tip (62) leading, can be driven into the zone between one wedge face (83) of the wedge (81) and one of the spreadable portions (52) of the foot (51) of the anchor.

3. A device according to claim 1, characterized in that the terminal extension (65) is reduced in a stepwise manner as compared to the reamining portion of the foot (51) of the anchor.

4. A device according to claim 2, characterized in that the wedge (81) has a width corresponding to the diameter of the wall anchor (5), and in that longitudinal grooves (82) extending centrally in the twowedge faces (83) are provided for guiding the knock-in pin (53).

5. A device according to any one of claims 1 to 4, characterized in that the ratio of the cross-sectional reduction (60) of the axial bore (57) is at least 1 : 2 and preferably at least 1 : 3.

6. A device according to any one of claims 1 to 5, characterized in that the zone of transition between the wide portion (57') and the narrow portion (57'') of the axial bore (57) is formed by arcuate sharp-cornered edge parts which, in the spread condition of the foot (51) of the anchor, bear by their sharp corners (63), in the manner of barbs, against the cylindrical outer surface of the stem (61) of the pin, which surface may be provided with circumferential grooves.

7. A device according to any one of claims 1 to 6, characterized in that, at the roots of the spreadable portions (52) of the foot (51) of the anchor, the longitudinal slot (50) is bounded by a transverse bore (80), the diameter of which is greater than the width of the slot so that a bending zone comprising a reduced amount of material is formed on the spreadable portions (52).

8. A device according to any one of claims 1 to 7, characterized in that at its outer end, the wall anchor (5) is regidly connected to a thick-walled-flange plate (7) by way of the bottom face (74) of the latter and overhangs the flange plate substantially at right angles, which bottom face carries, on its broad-side face opposite the surface, an overhanging suspensiom member (71) having a greater cross-section than the wall anchor (5) for securing objects, and which is insertable in a recess (15) in the wall surface (12) corresponding to the dimensions of the flange plate (7) and containing the mouth of the anchor bore (10), said flange plate being supported against the walls of the recess by its peripheral or bottom surface (73, 74).

9. A device according to claim 8, characterized in that the wall anchor (5) and the pin-shaped or plug-shaped suspension member (71) are arranged off-centre and centrally respectively at a distance from each other on the flange plate (7).

10. A device according to claim 8 or 9, characterized in that the flange plate (7) has a circular contour.

11. A device according to any one of claims 8 to 10, characterized in that the edge (75) of the broad side surface (74) of the flange plate (7) that faces the anchor is chamfered.

12. A device according to any one of claims 8 to 11, characterized in that the wall anchor (5) is screwed into a tapped hole (72) in the flange plate (7) and/or is welded to the flange plate.

13. A device according to any one of claims 8 to 12, characterized in that the suspension member (71) is formed by a treaded pin welded to the flange plate (7).

14. A device according to any one of claims 1 to 13, characterized in that the axial bore (57) as well as the cavities and gaps in the spread foot (51) of the anchor and between the anchor surface and the hole (10) in the wall can be filled with a hardenable filling compound (54).

## Revendications

1. Dispositif pour fixer des objets sur un mur achevé en béton comprenant un ancrage de mur (5) pouvant être placé dans un trou (10) du mur de béton et présentant un trou traversant axial, ledit ancrage présentant au moins une fente disposée dans le sens de la longueur (50), qui traverse le trou axial (57), partage le pied de l'ancrage en au moins deux parties écartables (52) liées entre elles au niveau de leur racine (59), et s'ouvre vers l'extrémité libre (64) du pied de l'ancrage, le trou axial (57) dudit ancrage présentant, au voisinage du milieu de la fente longitudinale (50), et du côté du pied (64) de l'ancrage, un rétrécissement (60) en forme de palier de sa section intérieure, et contenant un percuteur (53) qui peut être déplacé le long du trou axial (57), qui, grâce à une surface conique, écarte l'une de l'autre les deux parties écartables (52) du pied (51) de l'ancrage, et qui comporte une pointe conique (62) s'enfonçant dans le trou axial (57) de la partie large (57') à la partie rétrécie (57'') de celui-ci, et une tige cylindrique (61) se raccordant à la pointe conique par l'arrière de celle-ci, ledit percuteur étant, dans l'ensemble, plus long que la distance séparant le rétrécissement (60) de la section intérieure de l' extrémité frontale (64) du pied (51) de l'ancrage alors que la pointe conique est plus courte que cette distance, caractérisé en ce que la tige cylindrique (61) du percuteur est d'un diamètre adapté à la partie large (57') du trou axial, et en ce que le pied (51) de l'ancrage présente du côté frontal un prolongement (65) dont les dimensions transversales sont réduites par rapport au diamètre du reste de l'ancrage, et dont la surface latérale, lorsque le pied (61) de l'ancrage est dans son état »écarté« le percuteur étant enfoncé jusqu'à sa tige (61) dans le rétrécissement (60) se trouve, au moins au voisinage de son extrémité libre (64), à l'intérieur de la plage des diamètres des pièces de l'ancrage considéré dans son état »non écarté«.

2. Dispositif pour fixer des objets sur un mur achevé en béton, comprenant un ancrage de mur (5) pouvant être placé dans un trou (10) du mur de béton et présentant un trou traversant axial, ledit dispositif présentant au moins une fente diposée dans le sens de la longueur (50), qui traverse le trou axial (57), partage le pied de l'ancrage en au moins deux parties écartables (52) liées entre elles au niveau de leur racine (59), et s'ouvre vers l'extrémité libre (64) du pied de l'ancrage, le trou axial (57) dudit ancrage présentant, au voisinage du milieu de la fente longitudinale (50), et du côté du pied (64) de l'ancrage, un rétrécissement (60), en forme de palier, de sa section intérieure, et contenant un percuteur (53) qui peut être déplacé le long du trou axial (57), qui, grâce à une surface conique, écarte l'une de l'autre les deux parties écartables (52) du pied (51) de l'ancrage et qui comporte une pointe conique (62) s'enfonçant dans le trou axial (57) de la partie large (57') à la partie rétrécie de celui-ci, et une tige cylindrique (61) se raccordant à la pointe conique par l'arrière de celle-ci, caractérisé en ce que la tige cylindrique (61) du percuteur (53) est d'un diamètre adapté à la partie large (57') du trou axial, en ce que de plus est prévu un coin (81) dont les surfaces inclinées (83) sont planes dont l'arête aigüe (85) peut entrer frontalement dans la fente longitudinale (50) du pied (51) de l'ancrage, qui à létat »non écarté«, dépasse les surfaces frontales (64) du pied de l'ancrage et qui, du fait que l'on enfonce par percussion l'ancrage du mur (5) dans le trou (10) du mur, réalisé sous forme d'un trou borgne, et du fait que le coin (81) s'appuie par sa surface limitante (84) opposée à l'arête (85) sur le fond (14) du trou borgne peut, en écartant l'une de l'autre les parties écartables (52) du pied (51) de l'ancrage, żetre poussé dans la fente longitudinale (50), et en ce que le percuteur (53) peut être poussé, sa pointe conique (62) étant à l'avant, dans la région comprise entre une des surfaces de coin (83) du coin (81) et une des parties écartables (52) du pied (51) de l'ancrage.

3. Dispositif selon la revendication 1, caractérisé en ce que le prolongement frontal (65) se réduit par échelons à partir du reste du pied (51) de l'ancrage.

4. Dispositif selon la revendication 2, caractérisé en ce que le coin (81) a une largeur correspondant au diamètre de l'ancrage du mur (5) et en ce que sont prévues, dans les deux surfaces de coin (83), des rainures (82) dirigées selon la médiane desdites faces et destinées à guider le percuteur (53).

5. Dispositif selon une des revendications 1 à 4, caractérisé en ce que la diminution (50) de la section intérieure du trou axial (57) se caractérise par un rapport d'au moins 1 : 2, et de préférence d'au moins 1 : 3.

6. Dispositif selon une des revendications 1 à 5, caractérisé en ce que la région de transition entre la partie large (57') et la partie étroite (57'') du trou axial (57) est formée par des régions marginales à arêtes vives, en forme de portions de cercle, qui lorsque le pied d'ancrage (51) est dans son état »écarté« s'appliquent comme les crochets de retenue par leurs angles aigüs contre la surface latérale cylindrique, éventuellement pourvue de rainures périphériques, de la tige (61) du percuteur.

7. Dispositif selon une des revendications 1 à 6, caractérisé en ce que la fente longitudinale (50) est limitée, du côté de la racine (59) des parties écartables (52) du pied (51) de l'ancrage, par un trou transversal (80) dont le diamètre est supérieur à la largeur de la fente, ceci afin de former une zone de flexion ù l'épaisseur de matière est moindre.

8. Dispositif selon une des revendications 1 à 7, caractérisé en ce que l'ancrage de mur (5) est regidement relié, à son extrémité extérieure, à une plaque à parois épaisses (7), formant bride, sur la surface de base (74) de laquelle il saille à peu près perpendiculairement, ladite plaque portant sur sa face opposée, tournée vers la surface, un organe de suspension en saillie, (71) destiné à la fix ation d'objets, et dont la section est plus grande que celle de l'ancrage de mur (5), et pouvant s'engager dans un renfoncement de la surface du mur (12), dont les dimensions correspondent à celles de la plaque-bride (7), qui contient l'entrée du trou (10) d'ancrage, et s'appuyer par ses surfaces latérales (73) ou par sa surface de fond (74) sur les parois dudit renfoncement.

9. Dispositif selon la revendication 8, caractérisé en ce que l'ancrage de mur (5) est décentré et l'organe de suspension (71), en forme de boulon ou de téton, est centré par rapport à la plaque-bride (7), l'ancrage et l'organe de suspension étant séparés par une certaine distance.

10. Dispositif selon la revendication 8 ou la revendication 9, caractérisé en ce que la plaque-bride (7) présente un pourtour circulaire.

11. Dispositif selon une des revendications 8 à 10, caractérisé en ce que l'arête (75) de la face de base côté ancrage (74) de la plaque-bride (7) eet chanfreinée.

12. Dispositif selon une des revendications 1 à 11, caractérisé en ce que l'ancrage de mur (5), est introduit par vissage dans un trou fileté (72) de la plaque-bride (7) et/ou soudé à celle-ci.

13. Dispositif selon une des revendications 8 à 12, caractérisé en ce que l'organe de suspension (71) est formé par un téton fileté soudé à la plaque-bride.

14. Dispositif selon une des revendications 1 à 13, caractérisé en ce que le trou axial (57) ainsi que les espaces creux et les espaces intermédiaires qui se trouvent dans le pied d'ancrage (51) après écartement de celui-ci, et entre la surface de l'ancrage et le trou (10) du mur peuvent être remplis d'une pâte durcissante (54).

0 056 255

**Fig. 1**

5   53  61  62  60  63  51  52  65  64

57   57'   59   63   57"

**Fig. 2**

57'  57  5   59  50  52  60  51  64

52   63  61  53  62   57

65

**Fig. 3**

10  6  5  1

57   12

71

7

**Fig. 4**

73  15  57  5  1  54  10  13  60  11  51  52

12   53

72   62

71   14

16   52

54   61

7

74   13

75

## Fig. 5

## Fig. 6

## Fig. 7